# EUROPEAN PATENT APPLICATION

(11) **EP 1 455 267 A2**
(43) Date of publication of application: **08.09.2004**
(21) Application number: 04004864.7
(22) Date of filing: 02.03.2004
(51) Int. Cl.: G06F 3/14, H04N 5/74

(54) **Information processing apparatus and program**

(30) Priority: 04.03.2003 JP 2003057366
(71) Applicant: Kabushiki Kaisha Toshiba, Tokyo (JP)
(72) Inventor: Kakemura, Atsushi, Minato-ku Tokyo 105-8001 (JP)
(74) Representative: Henkel, Feiler & Hänzel

(57) **Abstract**

An information processing apparatus comprises: a first unit (130) capable of wirelessly communicating with a plurality of external devices which display received image data; a second unit (130) for simultaneously transmitting the image data to the plurality of external devices by using the first unit; and a third unit (102) for updating the image data transmitted by the second unit.

## Description

The present invention relates to an information processing apparatus such as PDA (Personal Digital Assistants) and a program used in this information processing apparatus.

In recent years, various kinds of portable information processing apparatuses such as PDA, notebook type personal computers and others have been developed. A majority of this type of portable information processing apparatuses have a wireless communication function, and can be wirelessly connected to other information processing apparatuses and various kinds of consumer electronic devices.

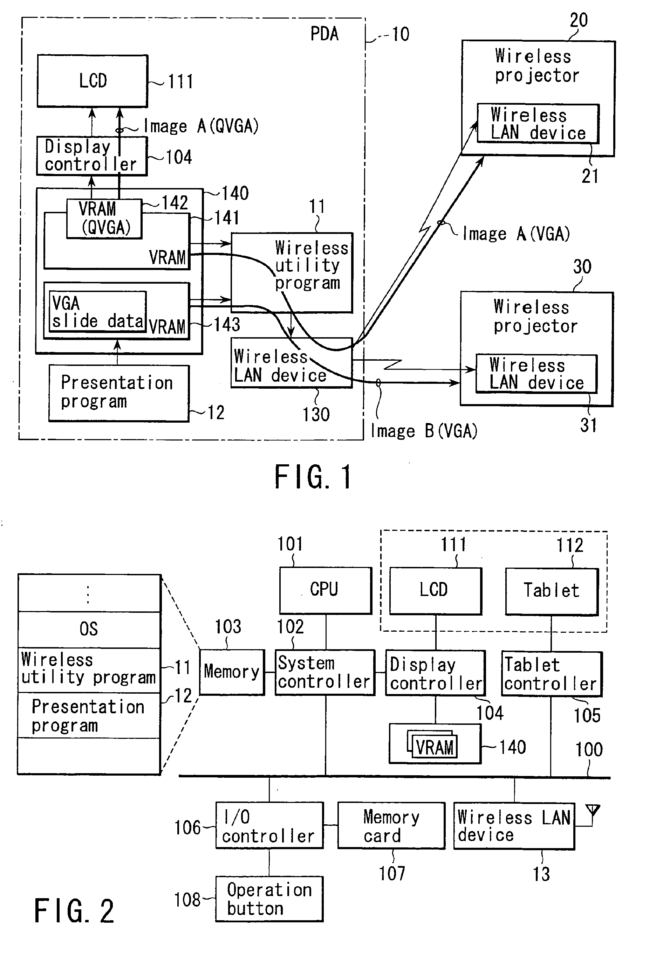

As an application system using the wireless communication function of the information processing apparatuses, there is known an information display system which displays image data wirelessly transmitted from an information processing apparatus onto a large screen by using a projector (see, e.g., FIG. 1 of Jpn. Pat. Appln. KOKAI Publication No. 2000-222163). In this information display system, image data stored in a storage device of an information processing apparatus is transmitted to a projector via radio waves.

Conventional information processing apparatuses have a problem in function and usability with respect to a presentation function targeting at a plurality of external display devices.

An object of the present invention is to provide an information processing apparatus and a program which can realize a presentation function with the high functionality and the excellent usability.

The present invention is characterized in that the presentation function can be simultaneously realized with respect to a plurality of external display devices capable of performing wireless communication.

An information processing apparatus according to an aspect of the present invention is characterized by comprising: means capable of wirelessly communicating with a plurality of external devices which display received image data; means for simultaneously transmitting the image data to the plurality of external devices by using the means capable of communicating; and means for updating the image data transmitted by the means for simultaneously transmitting the image data. The present invention can be also achieved as an invention of a method, and a program, etc.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating a function of an information processing apparatus according to a first embodiment of the present invention;
FIG. 2 is a block diagram showing a system configuration of the information processing apparatus according to the first embodiment;
FIG. 3 is a view illustrating slide data transmission processing executed by the information processing apparatus according to the first embodiment;
FIG. 4 is a view showing a relationship between slide data displayed in the information processing apparatus according to the first embodiment and slide data transmitted to a projector;
FIG. 5 is a view showing an example of a wireless utility window displayed in a display device of the information processing apparatus according to the first embodiment;
FIG. 6 is a view showing a state that the wireless utility window is minimized;
FIG. 7 is a flowchart showing a procedure of wireless presentation processing executed by the information processing apparatus according to the first embodiment;
FIG. 8 is a flowchart showing a procedure of the wireless presentation processing executed by the information processing apparatus according to the first embodiment;
FIG. 9 is a block diagram illustrating a function of an information processing apparatus according to a second embodiment of the present invention;
FIG. 10 is a block diagram illustrating a function of an information processing apparatus according to a third embodiment of the present invention; and
FIG. 11 is a block diagram illustrating a function of an information processing apparatus according to a fourth embodiment of the present invention.

Embodiments according to the present invention will now be described hereinafter with reference to the accompanying drawings.

FIG. 1 is a block diagram showing an information processing apparatus according to a first embodiment of the present invention. The information processing apparatus is realized as a PDA 10. The PDA10 is a portable information processing apparatus which functions as a mobile terminal. The PDA 10 comprises a wireless LAN device 130. The wireless LAN device 130 is a wireless communication device which executes wireless communication in accordance with, e.g., IEEE 802.11a/IEEE 802. 11b standard. A wireless presentation function provided to the PDA 10 will now be described hereinafter.

The wireless presentation function is a function to display screen image data drawn by a presentation program 12 executed by the PDA 10 onto a projection screen of a wireless projector. In the first embodiment, the presentation function can be simultaneously executed to the respective wireless projectors by transmitting the same image data or different image data to all wireless projectors, which exist around the PDA 10 and can communicate with the PDA 10, and updating each image data. Each function such as communication connection between the PDA 10 and the plurality of wireless projectors, selection of the projector or the like in this example will be described later.

The wireless presentation function in the first embodiment has a function to display VGA screen image data (image A) which can be a base of screen image displayed in a display device (LCD) 111 of the PDA 10 onto a projection screen of a wireless projector 20 which has established communication. Further, the wireless presentation function has a function to display VGA screen image data (image B) drawn by the presentation program 12 executed in the background by the PDA 10 onto a projection screen of a wireless projector 30 which has established communication.

The presentation program 12 is an application program which executes, e.g., a slide show, and the presentation program 12 can generate screen image data having a VGA (640 x 480) size as slide data. The slide data having the VGA (640 x 480) size will be referred to as VGA slide data hereinafter.

It is to be noted that the VGA slide data is generated by processing of an application program (not shown) which executes the slide show like the presentation program 12 with respect to the screen image data (image A) displayed in the wireless projector 20 in the first embodiment.

When displaying the VGA slide data in the display device 111 of the PDA 10, the VGA slide data is converted into screen image data corresponding to a display resolution of the display device 111 of the PDA 10, and drawn in a video memory (VRAM) 142 in an display memory area 140. The display resolution of the display device 111 in this embodiment is QVGA (320 x 240) which is a resolution corresponding to 1/4 of VGA (640 x 480). Therefore, the screen image constituting the VGA slide data is contracted to 1/4 and then displayed in the display device 111 by control of a display controller 104.

The above-described wireless presentation function is realized by utilizing wireless communication between the PDA 10 and the wireless projectors 20 and 30. The wireless projector 20 comprises a wireless LAN device 21. The wireless projector 30 comprises a wireless LAN device 31. The wireless LAN devices 21 and 31 are wireless communication devices which are configured to execute wireless communication in accordance with, e.g., IEEE 802.11a/IEEE 802.11b standard.

A wireless utility program 11 is installed in the PDA 10 in advance. The wireless utility program 11 is a program which is used to control the wireless presentation. The wireless utility program 11 in the first embodiment transmits the VGA slide data (image A) drawn in a video memory (VRAM) 141 in the display memory area 140 by a non-illustrated application program to the wireless projector 20 through a wireless signal by using the wireless LAN device 130.
Furthermore, the presentation program 12, which operates in the background, transmits the VGA slide data (image B) drawn in a video memory (VRAM) 143 in the display memory area 140 to the wireless projector 30 through a wireless signal by using the wireless LAN device 130.

In this case, only when the VGA slide data (image A) drawn in the VRAM 141 is updated, the updated VGA slide data is transmitted from the PDA 10 to the wireless projector 20. Moreover, only when the VGA slide data (image B) drawn in the VRAM 143 is updated, the updated VGA slide data is transmitted from the PDA 10 to the wireless projector 30. The updated VGA slide data is transmitted to the wireless LAN device 130 after compressed and encoded by the wireless utility program 11. The VGA slide data is not transmitted from the PDA 10 to the wireless projector 20 in a period that a content of the VGA slide data is not changed.

Upon receiving the VGA slide data, each of the wireless projector 20 and the wireless projector 30 projects an optical image corresponding to the received VGA slide data onto a large screen for projection. In each of the wireless projector 20 and the wireless projector 30, the received VGA slide data is decoded and then written into a frame buffer. The optical image corresponding to the VGA slide data stored in the frame buffer is projected onto the large screen for projection.

A system configuration of the PDA 10 will now be described with reference to FIG. 2.

The PDA 10 comprises a CPU 101, a system controller 102, a memory 103, a display controller 104, a tablet controller 105, an I/O controller 106, a memory card 107, an operation button group 108, a tablet 112 integrated with the LCD 111 and others as shown in the drawing in addition to the display controller 104, the display device (LCD) 111, the wireless LAN device 130 and the display memory area 140 in which the VRAMs 141 to 143 are provided.

The CPU 101 is a processor used to control operations of the PDA 10, and executes an operating system (OS) and various kinds of application programs/utility programs. The operating system (OS) has a tablet control function used to realize a pen input operation.

The memory 103 comprises a non-volatile memory which stores the operating system (OS) and various kinds of application programs/utility programs, a RAM used as a main memory and a display memory area in which VRAMs are formed. The non-volatile memory also stores the wireless utility program 11 and the presentation program 12 which are described above.

The system controller 102 is a bridge device which connects a local bus of the CPU 101 with a system bus 100. The system controller 102 also contains a memory controller which controls the memory 103. The display controller 104 displays screen image data drawn in the VRAM 142 in the display memory area 140 to the display device 111 by controlling the display device 111 which is also used as a display device of the PDA 10. A display resolution of the display device 111 is QVGA (320 x 240) which is a resolution corresponding to 1/4 of VGA (640 x 480) as described above.

The tablet controller 105 controls the tablet 112 which is integrated with the LCD constituting the display device 111. The tablet 112 comprises a transparent coordinate detection device provided on a display screen of the display device 111. A touch screen on which a pen input operation can be performed is constituted of the LCD configuring the display device 111 and the tablet 112.

The I/O controller 106 performs the control over a memory card 107 which is detachably attached to the PDA 10 and the control over the operation button group 108. The operation button group 108 comprises a plurality of operation buttons such as a power button, an application button used to activate a specific application, a cursor key and others.

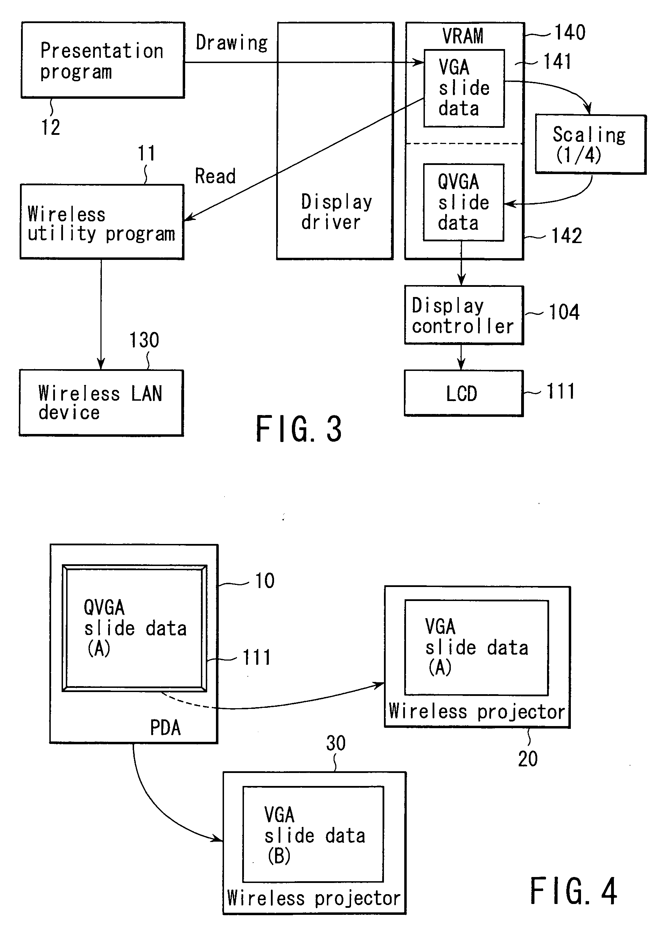

Processing to transmit the VGA slide data (image A) from the PDA 10 to the wireless projector 20 will now be described with reference to FIG. 3. In this example, there is assumed a case that QVGA slide data obtained by contracting the VGA slide data (image A) is displayed in the display device 111 while the VGA slide data (image A) is transmitted to the wireless projector 20.

In the first embodiment, a slide show to display a plurality of sets of slide data in the display device 111 in sequence is executed by using a non-illustrated presentation program. In this slide show, the presentation program generates the VGA slide data (image A), and draws the VGA slide data in the VRAM 141 through a display driver. The QVGA slide data actually displayed in the display device 111 is generated from screen image data constituting the VGA slide data. In this case, processing to reduce a size of the screen image data constituting the VGA slide data to 1/4 (scaling processing) is executed, and the screen image data reduced to 1/4 in size is drawn in the VRAM 142 as the QVGA slide data. The scaling processing is executed by the operating system (OS) which manages a screen image of the VRAM 142. This scaling processing may be executed by the display controller 104 under the control of the operating system.

The display controller 104 reads the QVGA slide data (image A) from the VRAM 142, and displays this slide data in the display device 111. The wireless utility program 11 reads the VGA slide data generated by the presentation program from the VRAM 141 through the display driver instead of the QVGA slide data, and transmits the VGA slide data to the wireless LAN device 130 as transmission data. Moreover, the wireless utility program 11 reads the VGA slide data generated by the presentation program 12 which operates in the background, and transmits the VGA slide data to the wireless LAN device 130 as transmission data.

Based on the above-described processing, as shown in FIG. 4, the QVGA slide data can be displayed in the display device 111, whilst the original VGA slide data (image A) used for generation of the QVGA slide data can be transmitted to the wireless projector 20. As a result, it is possible to display in the screen of the wireless projector 20 the slide data having the higher image quality than that in case of transmitting the QVGA slide data to the wireless projector 20. Additionally, the VGA slide data generated by the presentation program 12 which operates in the background can be read from the VRAM 143, and this VGA slide data (image B) can be transmitted to the wireless projector 30.

The processing to transmit the VGA slide data to the wireless projector 20 and the wireless projector 30 is executed every time new VGA slide data is generated by the presentation program. That is, the wireless utility program 11 monitors whether each VGA slide data is updated in a period that the PDA 10 is individually connected with the wireless projector 20 and the wireless projector 30 wirelessly, and transmits the updated VGA slide data to a corresponding wireless projector when updating of the VGA slide data is detected.

The wireless presentation function provided by the wireless utility program 11 will now be described in detail.

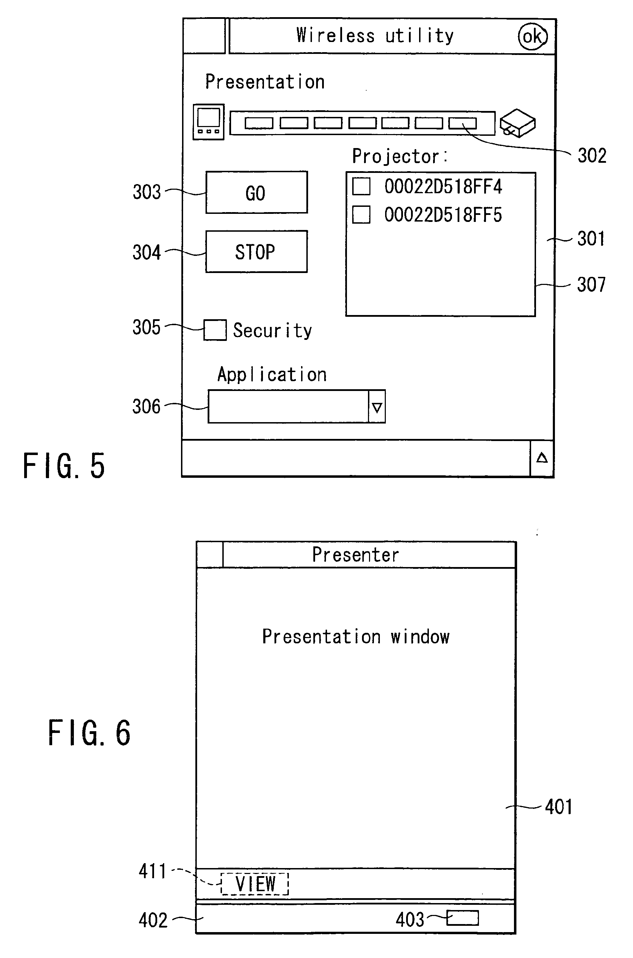

FIG. 5 shows a wireless utility window 301 displayed in the display device 111 by using the wireless utility program 11. When the wireless utility program 11 is activated by a user, the wireless utility window 301 shown in FIG. 5 is displayed on the screen of the display device 111.

As shown in the drawing, a transmission indicator 302, a [GO] button 303, a [STOP] button 304, a [Security] check box 305, an application selection pull-down menu 306, and a projector list 307 are arranged in the wireless utility window 301.

The transmission indicator 302 shows a state of communication between the PDA 10 and the wireless projector 20 or the wireless projector 30 which is currently performing communication. The [GO] button 303 is a button used to instruct start of the wireless presentation function in order to automatically transmit slide data from the PDA 10 to the wireless projector 20 and the wireless projector 30. When the [GO] button 303 is tapped (clicked) by a pen operation by a user, the wireless presentation function is started. The [STOP] button 304 is a button which instructs to stop the wireless presentation function.

The projector list 307 shows a list of the wireless projectors which exist in a range to which a wireless signal transmitted from the PDA 10 can be supplied. That is, a list of device identification information (e.g., a MAC address) corresponding to each wireless projector detected by the wireless utility program 11 is displayed in the projector list 306.

In the projector list 307, a check box is displayed in accordance with device identification information of each wireless projector capable of communicating with the PDA 10. A user can select a destination projector to which slide data should be transmitted by tapping the check box. For example, in an environment that a wireless projector is set in each of a plurality of adjacent conference rooms, the PDA 10 can communicate with each of the plurality of projectors. Selecting a destination projector by a user using the projector list 307 can prevent slide data from being accidentally transmitted to a projector which is not intended by the user. The [GO] button 303 is not displayed in the wireless utility window 301 until a destination projector is selected by a user. In this embodiment, each of the wireless projector 20 and the wireless projector 30 can be connected with the PDA 10 for wireless communication by tapping each check box of the wireless projector 20 and the wireless projector 30 from a list of the wireless projectors displayed in the projector list 307.

The [Security] check box 305 is used to cause a user to specify whether slide data which should be transmitted is to be encrypted. When the [Security] check box 305 is checked by a user, the wireless utility program 11 is set to a security mode. In the security mode, slide data is encrypted and then transmitted to the wireless projector 20 and the wireless projector 30.

The application selection pull-down menu 306 is used to cause a user to specify a presentation program which should be used in the wireless presentation function.

When the [GO] button 303 is tapped by a user, the wireless utility window 301 is minimized and stored as an icon 403 in a command bar 403 as shown in FIG. 6. At the same time, the presentation program specified in the application selection pull-down menu 306 is activated, and an operation window 401 of that presentation program is displayed in the display device 111. A user can instruct the presentation program to execute the slide show by taping a [VIEW] button 411 in the operation window 401 of the presentation program.

When the icon 403 is tapped by the user, the wireless utility window 301 is again displayed. Here, when the [STOP] button 304 is tapped, execution of the wireless presentation function is stopped.

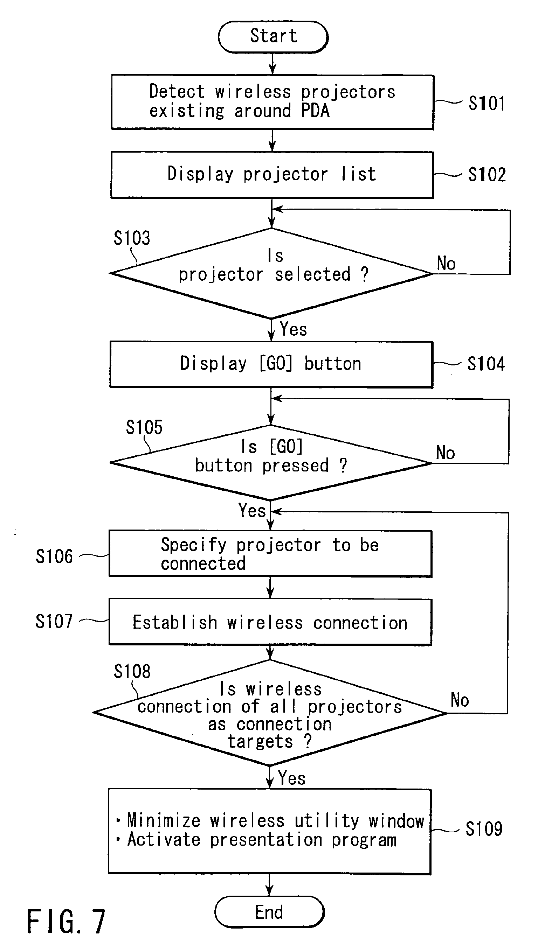

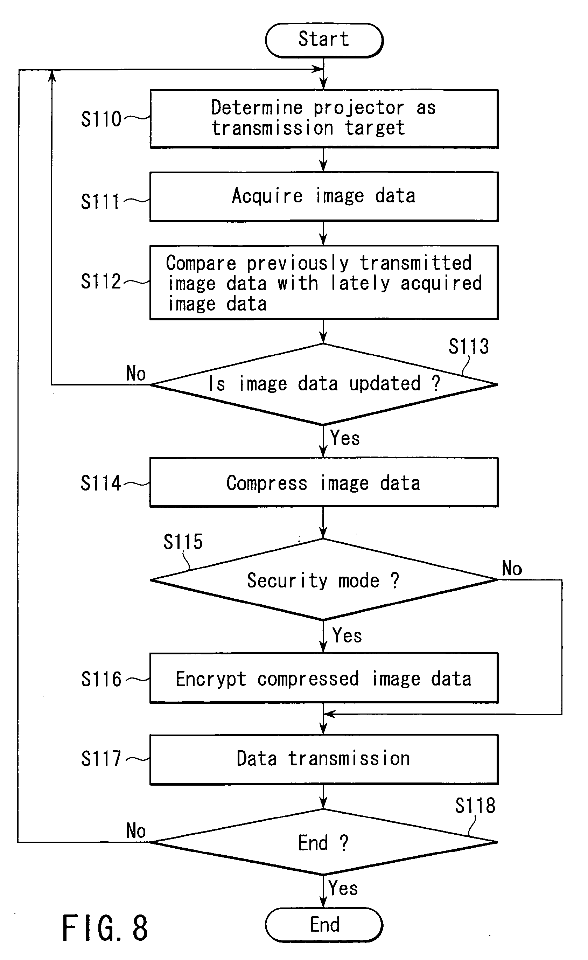

A procedure of the wireless presentation processing executed by the wireless utility program 11 will now be described with reference to flowcharts shown in FIGS. 7 and 8.

When the wireless utility program 11 is activated, the wireless utility program 11 displays the wireless utility window 301, and then detects wireless projectors existing around the PDA 10 (step S101 in FIG. 7). At the step S101, device discovery processing to detect devices capable of communicating with the PDA 10 (wireless projectors in this example) is executed.

That is, the wireless utility program 11 broadcasts a device discovery command to discover devices by using the wireless LAN device 13, and waits for a response with respect to that device discovery command. In this embodiment, each wireless projector 20 which has received the device discovery command returns a response including an MAC address assigned to the wireless LAN device 21 thereof and an identifier indicative of a device type (= projector) thereof to the PDA 10. Further, each wireless projector 30 which has received the device discovery command returns a response including an MAC address assigned to the wireless LAN device 31 thereof and an identifier indicative of a device type thereof to the PDA 10. Based on this response, the wireless utility program 11 can detect each wireless projector existing in a range to which a wireless signal transmitted from the PDA 10 can be supplied.

Then, the wireless utility program 11 displays a list of the detected wireless projectors in the projector list 307 shown in FIG. 5 (step S102 in FIG. 7). When a given wireless projector in the projector list 307 is selected by a user (YES at a step S103 in FIG. 7), the wireless utility program 11 displays the [GO] button 303 in the wireless utility window 301 (step S104 in FIG. 7). In this embodiment, when each check box of the wireless projector 20 and the wireless projector 30 is tapped and selected from a list of wireless projectors displayed in the projector list 307, the [GO] button 303 is displayed in the wireless utility window 301.

Here, when the [GO] button 303 is tapped by a user (YES at a step S105 in FIG. 7), the wireless utility program 11 transmits a connection request to each of the wireless projector 20 and the wireless projector 30 selected from the projector list 306 (step S106 in FIG. 7), and establishes wireless connection with the selected wireless projector 20 and wireless projector 30 (step S107 in FIG. 7). In this processing (step S107), not only a physical wireless link between the PDA 10 and the selected wireless projectors 20 and 30 is established but also a session between them is achieved.

When each wireless connection of the wireless projectors 20 and 30 is achieved (YES at a step S108 in FIG. 7), the wireless utility program 11 minimizes the wireless utility window 301, and activates an application program (presentation program) which performs presentation relative to the wireless projectors 20 and 30 (step S109). As a result, the slide show (VGA slide show) using the plurality of wireless projectors 20 and 30 is started.

In this VGA slide show processing, the wireless utility program 11 first determines a wireless projector to which data is transmitted, and acquires VGA slide data which is transmitted to that wireless projector (steps S110 and S111 in FIG. 8). Here, preference is given to the wireless projector 20 which displays the VGA slide data (image A) having the same content as that of the QVGA slide data displayed in the display device 111 over the wireless projector 30 which displays the VGA slide data generated by the presentation program 12 which operates in the background. Therefore, first, the VGA side data (image A) which is transmitted to the wireless projector 20 is acquired from the VRAM 141.

The wireless utility program 11 judges whether the VGA slide data (image A) is updated (step S112 in FIG. 8) by comparing newly acquired screen image data (image A) with screen image data (image A) previously transmitted in later-described data transmission processing (step S117 in FIG. 8). Here, if the lately acquired screen image data is different from the previously transmitted screen image data, it is recognized that the VGA slide data (image A) is updated, i.e., new VGA slide data (image A) is generated by the presentation program (YES at a step S113 in FIG. 8). In this case, it is determined that the newly acquired screen image data is data which should be transmitted (i.e., updated VGA slide data).

It is determined that the VGA slide data acquired first after the [GO] button 303 is pressed is absolutely the updated VGA slide data.

The processing to acquire the VGA slide data (step S111 in FIG. 8) and the processing to judge whether that acquired VGA slide data is different from the previously transmitted VGA slide data (step S112 in FIG. 8) are repeatedly executed at fixed time intervals.

If it is determined that the acquired VGA slide data is the data which should be transmitted (updated VGA slide data) (YES at the step S113 in FIG. 8), the wireless utility program 11 compresses and encodes the acquired VGA slide data (step S114 in FIG. 8). Then, the wireless utility program 11 judges whether the security mode is selected (step S115 in FIG. 8). If the security mode is selected (YES at the step S115 in FIG. 8), the wireless utility program 11 encrypts the compressed and encoded VGA slide data (step S116 in FIG. 8), and transmits the encrypted VGA slide data to the selected projector 20 by using the wireless LAN device 130 (step S117 in FIG. 8). Furthermore, if the security mode is not selected (NO at the step S115 in FIG. 8), the compressed and encoded VGA slide data is transmitted to the projector 20 without being encrypted.

After the VGA slide data (image A) drawn in the VRAM 141 is transmitted to the wireless projector 20 in this manner, the wireless utility program 11 then acquires VGA slide data (image B) generated by the presentation program 12 operating in the background and drawn in the VRAM 143 and transmits this VGA slide data (image B) to the wireless projector 30 by using the wireless LAN device 130 based on the same processing (steps S110 to 117 in FIG. 8). Since this processing can be readily understood from the processing to transmit the VGA slide data (image A) to the wireless projector 20, the explanation of each processing is eliminated here.

Wireless connection between the PDA 10 and the wireless projector 20 and the wireless projector 30 is maintained until a user taps the [STOP] button. In a period that this wireless connection is maintained, the processing shown in FIG. 8 is repeatedly executed.

When a user taps the [STOP] button 304, the wireless presentation processing is stopped. The PDA 10 transmits a disconnection request to each of the wireless projectors 20 and 30. As a result, the wireless connection between the PDA 10 and the wireless projectors 20 and 30 is cut off, and the wireless presentation processing according to this embodiment is terminated (YES at a step S118 in FIG. 8).

As described above, in the wireless presentation processing according to this embodiment, the original VGA slide data (image A) with the high image quality used to generate the QVGA slide data displayed in the display device is transmitted to the wireless projector 20 instead of that QVGA slide data. Moreover, the VGA slide data (image B) generated by the presentation program 12 operating in the background is transmitted to the wireless projector 30 concurrently with the wireless presentation. Additionally, since no data is transmitted in a period that screen image data of the VGA slide data is not changed, occurrence of wasteful wireless communication can be suppressed.

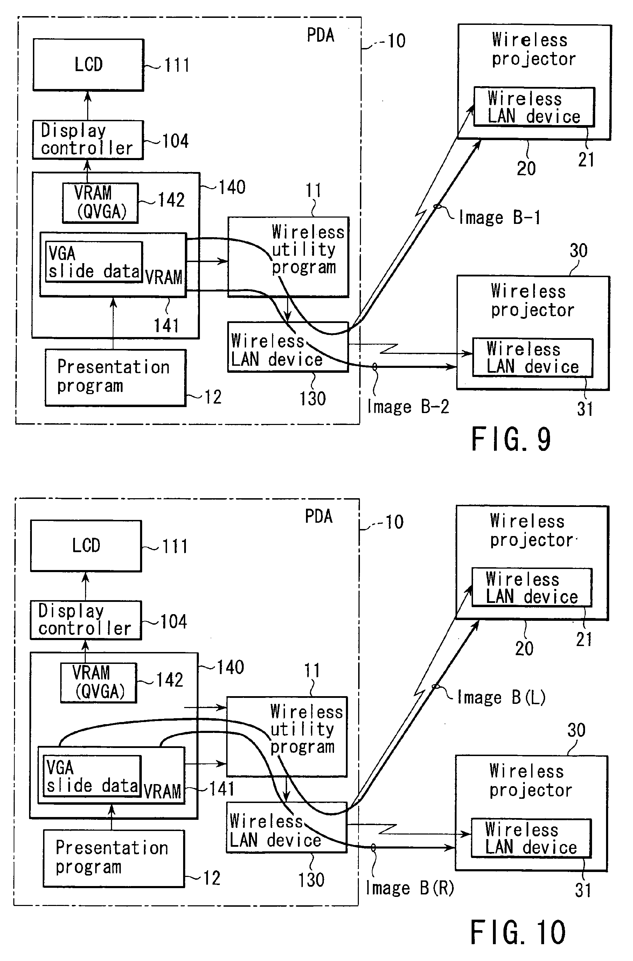

FIG. 9 shows an information processing apparatus according to a second embodiment of the present invention. The second embodiment depicted in FIG. 9 realizes a function to cause screen image data (image B) drawn in a VRAM 141 by a presentation program 12 to be simultaneously displayed on respective projection screens of a plurality of wireless projectors 20 and 30 which have achieved communication.

FIG. 10 shows an information processing apparatus according to a third embodiment of the present invention. The third embodiment depicted in FIG. 10 realizes a function to divide screen image data (image B) drawn in a VRAM 141 by a presentation program executed in the background into a plurality of areas and display a result in a plurality of wireless projectors 20 and 30 by means of multi-screen display.

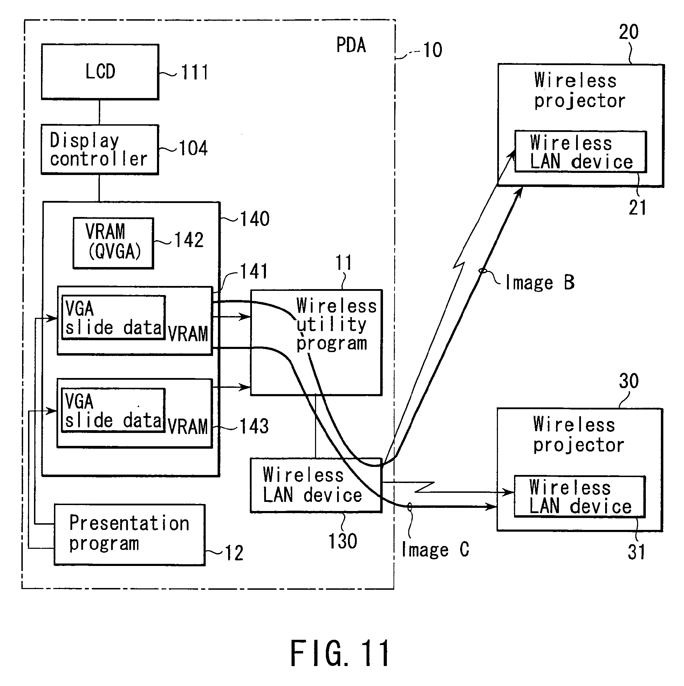

FIG. 11 shows an information processing apparatus according to a fourth embodiment of the present invention. The fourth embodiment depicted in FIG. 11 realizes a function to cause screen image data (image B) drawn in a VRAM 141 by a presentation program 12 executed in the background to be displayed in a wireless projector 20 and cause screen image data (image C) drawn in a VRAM 142 to be displayed in a wireless projector 30.

Since processing operations of the respective embodiments shown in FIGS. 9 to 11 can be readily understood from the operation of the above-described first embodiment, the explanation of their detailed operations is eliminated here.

It is to be noted that applying the wireless utility program 11 which realizes the functions illustrated in FIGS. 7 and 8 to existing various information processing apparatuses having wireless communication with external devices as well as the PDA having the structure depicted in FIG. 1 and FIGS. 9 to 11 can realize the presentation function using high-definition images in a plurality of external devices at the same time like the foregoing embodiments.

As described above, according to the present invention, it is possible to realize the information processing apparatus having the wireless presentation function with the high functionality and the excellent usability.

Further, although the example that the PDA 10 realizes the wireless presentation function using the VGA slide data with respect to each of the two wireless projectors 20 and 30 has been described in connection with the foregoing embodiments, the present invention is not restricted to the two wireless projectors 20 and 30, and the wireless presentation function using high-definition image data such as SVGA (800 x 600, 1024 x 768, 1280 x 1024 and the like) can be simultaneously realized with respect to three or more external display devices capable of communicating with the PDA 10 by wireless. Furthermore, in this case, one wireless communication device does not perform communication connection with respect to each external display device which is to be connected by wireless, but a plurality of types of communicating means having different communication protocols, communication lines and others can be used to realize the presentation function utilizing high-definition images with respect to a plurality of external display devices at the same time. For example, the communication connection can be carried out with respect to a given specific external display device through a metal communication table, and the wireless connection can be achieved relative to the other remaining external devices, thereby realizing the presentation function using high-definition image data in the respective external display devices.

## Claims

1. An information processing apparatus **characterized by** comprising:
means (130) capable of wirelessly communicating with a plurality of external devices which display received image data;
means (130) for simultaneously transmitting the image data to the plurality of external devices by using the means capable of wirelessly communicating; and
means (102) for updating the image data transmitted by the means for simultaneously transmitting the image data.

2. The information processing apparatus according to claim 1, **characterized in that** the means capable of wirelessly communicating comprises:
means for detecting all external devices which can perform wireless communication from the plurality of external devices existing on the periphery as detection targets;
a user interface which displays each of the external devices detected by the means for detecting all external devices so as to be capable of being selected; and
means for establishing communication with each of the external devices selected by the user interface.

3. The information processing apparatus according to claim 1, **characterized in that** the means for simultaneously transmitting the image data transmits image data of an application program which operates in the background to at least one external device.

4. The information processing apparatus according to claim 1, **characterized in that** the means for simultaneously transmitting the image data transmits image data having the same content as that of currently processed image data which is internally displayed to at least one external device.

5. The information processing apparatus according to claim 1, **characterized in that** the means for simultaneously transmitting the image data transmits image data divided into a plurality of areas for a multi screen to the plurality of external devices.

6. The information processing apparatus according to claim 1, **characterized in that** the means for simultaneously transmitting the image data transmits image data of each of a plurality of application programs to the plurality of external devices.

7. The information processing apparatus according to claim 1, **characterized in that** each of the external devices is a projector device configured to project an optical image corresponding to received image data onto a projection screen.

8. The information processing apparatus according to claim 7, **characterized in that** the means capable of wirelessly communicating comprises:
means for detecting each of all the projector devices existing in a range to which a transmitted wireless signal can be supplied;
means for displaying a list of the detected projector devices to each projector device so as to be capable of being selected; and
means performing communication connection with respect to each of the projector devices selected from the list,
wherein the means for simultaneously transmitting the image data transmits screen image data to each of the projector devices selected from the list by using a wireless signal.

9. The information processing apparatus according to claim 8, **characterized by** further comprising a display device capable of displaying image data, and image data generated based on image data transmitted to the projector device is displayed in the display device.

10. The information processing apparatus according to claim 1, **characterized in that** the means for simultaneously transmitting the image data includes means for transmitting the same image data to the plurality of external devices.

11. The information processing apparatus according to claim 1, **characterized in that** the means for simultaneously transmitting the image data includes means for transmitting the different image data to the plurality of external devices.

12. A computer program product configured to store program instructions for execution on a computer system enabling the computer system to perform:
transmitting image data to a plurality of external devices capable of performing wireless communication which exist on the periphery; and
updating the image data which is transmitted to the external devices.

13. The program according to claim 12, **characterized in that** said transmitting the image data includes:
detecting each of all projector devices existing in a range to which a transmitted wireless signal can be supplied as the plurality of external devices capable of performing wireless communication;
displaying a list of the detected projector devices to each of the projector devices so as to be capable of being selected;
performing communication connection with respect to the projector device selected from the list; and
acquiring image data which is transmitted to the projector device to which the communication has been established.

14. The program according to claim 13, **characterized in that** said acquiring the image data includes acquiring image data which is a base of currently processed image data which is internally displayed, and acquiring image data of an application program which operates in the background.

15. The program according to claim 13, **characterized in that** said acquiring the image data includes acquiring image data which is a base of currently processed image data which is internally displayed or image data for a multi screen obtained by dividing image data of an application program which operates in the background into a plurality of areas.

16. The program according to claim 13, **characterized in that** said acquiring the image data includes acquiring image data of each of a plurality of application programs.

17. The program according to claim 13, **characterized in that** said updating the image data which is transmitted to the external device includes periodically acquiring image data with respect to the image data transmitted to each of the projector devices selected from the list, judging whether the acquired image data is updated image data by comparing the acquired image data with previously transmitted image data, and transmitting only image data which is determined as the updated image data.
